# EUROPEAN PATENT SPECIFICATION

(11) **EP 3 194 810 B1**
(45) Date of publication and mention of the grant of the patent: **27.02.2019**
(21) Application number: 15739607.8
(22) Date of filing: 22.07.2015
(51) Int. Cl.: F16H 57/04, F01P 7/16

(54) **TRANSMISSION HEAT EXCHANGE SYSTEM**
ÜBERTRAGUNGSWÄRMETAUSCHSYSTEM
SYSTÈME D'ÉCHANGE DE CHALEUR DE TRANSMISSION

(30) Priority: 28.07.2014 GB 201413289
(43) Date of publication of application: 26.07.2017
(73) Proprietor: Jaguar Land Rover Limited, Coventry, Warwickshire CV3 4LF (GB)
(72) Inventor: HUTCHINS, William, Coventry Warwickshire CV3 4LF (GB)
(74) Representative: Higgin, Paul
(86) International application number: PCT/EP2015/066764
(87) International publication number: WO 2016/016063

(56) References cited:
- WO-A1-2007/128123
- DE-A1-102013 211 931
- US-A1- 2011 088 378

## Description

### TECHNICAL FIELD

This invention relates to a transmission heat exchange system, and to an engine or vehicle comprising the same.

### BACKGROUND

The transmission in a vehicle controls the relationship between the revolutions per second of the engine and the wheel speed. A transmission typically comprises many mechanical parts, many of which must move in relation to one another as the vehicle is driven. As the vehicle moves, therefore, the transmission tends to heat up. This is partly due to excess heat from other areas of the engine, for example the heat produced by the combustion in the piston cylinders, and partly due to the mechanical action of the transmission itself.

To reduce friction within the transmission itself, a transmission is typically provided with transmission fluid, which usually primarily comprises oil. The transmission fluid also functions as a heat sink, absorbing heat from the components of the transmission and as such helping to prevent overheating.

The harder an engine is driven, the more heat is typically produced in the transmission. Therefore the transmission in a vehicle operating in challenging conditions, for example off-road, will heat up more than in other circumstances. As such, it may become necessary to provide the transmission with additional cooling, in order to prevent overheating.

Additional transmission cooling is usually achieved with a transmission heat exchanger, which is sometimes called a transmission heat exchanger or transmission oil cooler. When the transmission heat exchanger is used to cool the transmission, high temperature transmission fluid is pumped through one side of the heat exchanger, while lower temperature coolant is pumped through the other side of the heat exchanger; the two fluids do not intermix, but are allowed into close contact so that heat can flow from the transmission fluid to the coolant. The cooled transmission fluid is then returned to the transmission, where it helps to cool the other components of the transmission.

The transmission fluid has an ideal operating temperature, at which or close to which it will best serve to reduce friction within the transmission. As such, when the engine is cold, for example following a start-up or when ambient temperatures are low, it is desirable for the transmission fluid to heat up as fast as possible without any additional cooling from the transmission heat exchanger.

DE102013211931 describes a powertrain cooling system comprising a coolant pump and coolant flow passages. A first, three-position valve having operatively connected to an outlet of the coolant pump and has a first, a second and a third position to establish at least partly different modes coolant flow through the coolant flow passages. In a first coolant flow mode when the three-position valve having, in the first position, a flow of coolant from the coolant pump of both the cylinder head and the engine block is blocked. In a second coolant flow mode when the three-position valve having in the second position, a flow of coolant from the coolant pump is supplied to the cylinder head and block of the engine block. In a third coolant flow mode when the three positions having valve is in the third position, coolant flows from the coolant pump to the engine block and from the engine block to the cylinder head.

It is possible for the transmission heat exchanger to be used to warm the transmission. This is done by pumping coolant through the heat exchanger which is warmer than the transmission fluid which is being pumped through the other side of the heat exchanger. It may be desirable to do this at or shortly after a vehicle starts up in order to bring the transmission fluid up to its ideal operating temperature as quickly as possible.

Therefore it is desirable to regulate the function of the transmission heat exchanger such that the transmission is only cooled at an appropriate temperature.

### SUMMARY OF THE INVENTION

In accordance with the present invention there is provided a transmission heat exchange system comprising the features of claim 1.

In this way the invention provides a system which regulates the amount of coolant flowing through a transmission heat exchanger. In a particular embodiment, the temperature responsive component is arranged such that if the first valve is in a closed state, then the first valve will transition to an open state when the temperature of the temperature responsive component rises above a first threshold temperature. When the transmission is cold, for example shortly after the engine is started, the coolant in the transmission heat exchanger will also be cold. As such the temperature of the fluid in the first coolant input will also be low, and in turn the temperature of the temperature responsive component tends to be low, since the temperature responsive component extends at least partly into the first coolant input. Provided that the temperature responsive component is at or below the threshold temperature, the first valve is then maintained in a closed state.

As the temperature of the transmission rises, this will tend to heat the coolant in the transmission heat exchanger. With the first valve in a closed state, the coolant is allowed to flow from the transmission heat exchanger through the first valve at a first rate. The first rate of flow is a bleed of coolant, which allows a flow of coolant from the transmission heat exchanger to the first valve. As such, as the coolant in the transmission heat exchanger heats up, the coolant in the first coolant input will also heat up. This in turn heats the temperature responsive component. Eventually, the temperature responsive component becomes hotter than the first threshold, causing the first valve to open. This increases the flow of coolant through the transmission heat exchanger, hence helping to regulate the temperature of the transmission.

Typically, the first valve transitions between a closed state and an open state as the temperature increases from the first threshold temperature to a second threshold temperature. Typically, the flow of coolant from the transmission cooler through the first valve increases progressively from the first rate to the second rate as the first valve transitions between a closed state and an open state.

Typically, the temperature responsive component is arranged such that if the first valve is in an open state, then the first valve will transition to a closed state when the temperature responsive component sinks below a third threshold temperature.

Typically, the first valve transitions between an open state and a closed state as the temperature decreases from the third threshold temperature to a fourth threshold temperature. Typically, the flow of coolant from the transmission cooler through the first valve decreases progressively from the second rate to the first rate as the first valve transitions between an open state and a closed state.

It may be that the third threshold temperature is the same as the second threshold temperature. It may be that the fourth threshold temperature is the same as the first threshold temperature. Typically, the first valve may exhibit a hysteresis, whereby it may be that the third threshold temperature is beneath the second threshold temperature.

It may be that the temperature responsive component comprises a temperature sensor which operates the first valve.

It may be that the temperature responsive component comprises a first material which changes volume with temperature, the first material being arranged to operate the first valve when it changes volume. The first material may be a solid or a fluid, and may undergo a state change when the valve is being used.

Where it is used, it may be that the first material extends at least partially into the first coolant input such that the condition of the temperature responsive component is at least partially determined by the temperature of the coolant within the first coolant input. The first material may be clad in a protective cover formed of a second material. The second material may comprise metal or any other material suitable for conducting heat to the first material.

Typically, the first material comprises wax. Valves operated by the expansion or contraction of wax, or other materials, are typically mechanically reliable and cheap. By varying the constituents of the wax, the temperature response of the wax can be finely tuned such that the first valve responds as desired to changes in temperature.

Where a first material is used as discussed above, it may be that less than half of the first material extends into the first input. For example the first material may be formed into a cylinder, less than half of the length of which extends into the first input. It may be that between ten and fifty percent of the first material extends into the first input. It may be that between twenty five and thirty percent of the first material extends into the first input.

It may be that the first valve comprises a second coolant input, the second input being arranged to receive coolant from a further engine component. It may further be that the temperature responsive component extends at least partially into the second coolant input such that the condition of the temperature responsive component is at least partially determined by the temperature of the coolant within the second coolant input.

It may that the first valve comprises a three port valve.

It may be that the further engine component is a cabin heater. Alternatively it may be that the pump is arranged to pump coolant from an engine component to the first valve through the second coolant input. Coolant from the cabin heater or an engine component which is pumped to the first valve without passing through a radiator will tend to still carry excess heat above ambient temperatures, provided that the engine has heated up significantly above ambient temperatures. As such, exposing the temperature responsive component to such a heat source will tend to cause the first valve to open in line with the mechanisms described above. This becomes more likely when the engine has been turned on for a long time, or working under a heavy load, which are exactly the conditions under which transmission cooling is most likely to be necessary. This arrangement has the additional advantage that the cabin heater can heat the cabin using heat from the coolant without having to compete for coolant with the transmission heat exchanger. While the cabin heater is heating the cabin, the coolant it produces will be comparatively cold, and the first valve will therefore tend to prevent fluid flowing through the transmission heat exchanger. Only once the cabin heater has heated the cabin, and as such is producing excess hot coolant, will the first valve tend to allow coolant to flow through the transmission heat exchanger.

It may be that the transmission heat exchanger is arranged to receive coolant which has been heated above ambient temperatures. It may be that the transmission heat exchanger comprises a second valve, the second valve comprising at least a third input, the third input being arranged to receive coolant which has been heated above ambient temperatures, the pump being arranged to pump coolant from the second valve to the transmission heat exchanger.

Providing heated coolant to the transmission heat exchanger also provides heated coolant to the first valve, even when the first valve is closed, due to the bleed of coolant at the first rate. As such, directing heated coolant to the transmission heat exchanger can help to trigger the first valve to open by heating the temperature responsive component. It may be that the second valve comprises a fourth input, the fourth input being arranged to receive coolant from a radiator. The second valve may comprise wax. It may be that the second valve is arranged to receive coolant from a plurality of sources and mix the coolant such that coolant of a predetermined temperature is produced and pumped by the pump to the transmission heat exchanger.

An aspect of the invention provides an engine heat exchange system, comprising: a transmission heat exchange system as described above; and a radiator. The pump is arranged to pump coolant through the radiator.

An aspect of the invention provides an engine for use in a vehicle, the engine comprising an engine heat exchange system as described above.

An aspect of the invention provides a vehicle comprising an engine as described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention are further described hereinafter with reference to the accompanying drawings, in which:
Figure 1 shows a diagram of a first engine comprising a transmission heat exchange system according to the invention; and
Figures 2 shows a chart of the response to temperature of the first valve in Figure 1; and
Figure 3 shows a second engine 301 according to the invention.

### DETAILED DESCRIPTION

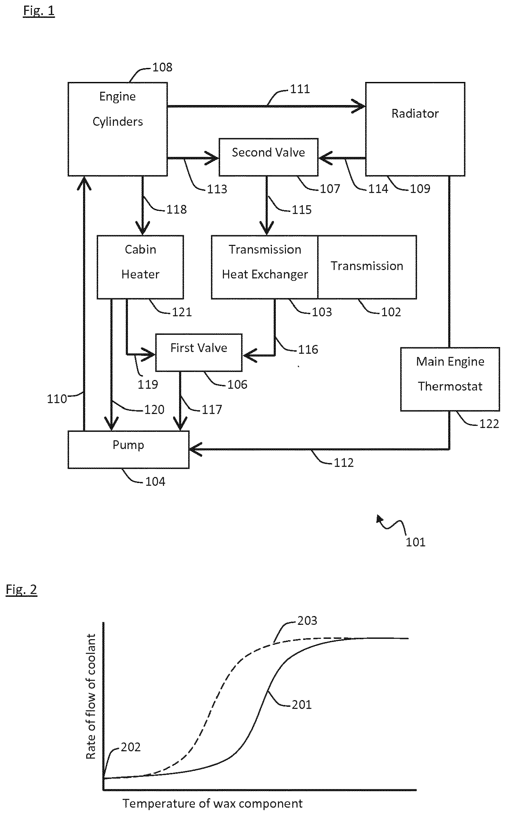

Figure 1 shows a diagram of a first engine 101 which comprises a transmission heat exchange system according to the invention. The first engine 101 is an internal combustion engine for use in a vehicle and comprises a transmission 102 which can be cooled by a transmission heat exchanger 103. The transmission heat exchanger 103 is connected to the transmission 102 such that transmission fluid can flow between the two and be cooled or heated by the transmission heat exchanger 103.

The first engine 101 further comprises a system of pipes or conduits 110 to 120, and a pump 104, which pumps coolant through the system of pipes, in the direction indicated by the arrows in the drawing, so as to cool the engine. As a part of this system, the coolant is pumped by the pump 104 through the transmission heat exchanger 103 so that the coolant can exchange heat with the transmission fluid, and the passage of the coolant through the first engine 101 is controlled in part by a first valve 106 and a second valve 107.

The system of pipes shown in Figure 1 also comprises other components which are not shown here for simplicity, and various bypasses which can be used to avoid pumping coolant through parts of the engine if this is required. For example, a bypass is provided for coolant to pass from the engine cylinders 108 directly to the main engine thermostat 122 without passing through the radiator 109.

The pump 104 pumps coolant first to the engine cylinders 108 along conduit 110. The coolant absorbs heat generated by the engine cylinders 108 and so helps to regulate their temperature. From the engine cylinders 108 the coolant may flow to the radiator 109 along conduit 111, the cabin heater 121 along conduit 118, or to the second valve 107 along conduit 113. The flow of coolant to the radiator 109 and cabin heater 121 is controlled by further valves which are not illustrated. Coolant in the cabin heater 121 is used to heat air which is then blown into the cabin of the vehicle. Coolant in the radiator 109 is cooled, normally by ambient air, until it is close to ambient temperatures.

From the radiator 109, the coolant may flow back to the pump 104 along conduit 112, passing through the main engine thermostat 122. Alternatively, the coolant form the radiator 109 may flow to the second valve 107 along conduit 114.

The second valve 107 is a three port valve, comprising two inputs and an output. As is discussed above, the second valve is arranged to receive coolant from the engine cylinders and the radiator. The coolant from these two sources mixes within the second valve 107 and then passes through the output of the second valve 107 to the transmission heat exchanger 103 along conduit 115.

A barrier within the second valve can be moved to change the relative proportions of coolant from the engine cylinders 108 and the radiator 109 which pass through the second valve 107 and reach the transmission heat exchanger 103.

Typically, and especially once the engine has been running for an extended period, the coolant from the engine cylinders 108 is hotter than the coolant from the radiator 109. Therefore, in such circumstances the temperature of the coolant provided to the transmission heat exchanger 103 is controlled at least in part by the location of the barrier within the second valve 107.

The purpose of the second valve 107 is to control the temperature of the coolant entering the transmission heat exchanger 103 through conduit 115. Initially, when the engine is cold, valve 107 closes the flow from the radiator 107, so that only flow from the engine along conduit 113 enters the transmission heat exchanger, whereby, after a few minutes of the engine starting to run, the transmission is warmed by that flow. As the engine starts to get hot the proportion of hot fluid in line 113 to cold fluid in line 114 is adjusted so that the coolant entering the transmission heat exchanger has a temperature slightly less than the desired operating temperature of the transmission heat exchanger to achieve a desired temperature of the transmission. For example the transmission may have an ideal working temperature of between 70 °C and 90 °C. The coolant entering the cooler 103 may ideally have a temperature of 80°C to achieve adequate cooling, assuming the transmission is working hard and generating heat. Any cooler and the transmission heat exchanger may over cool the transmission.

Example temperatures for the coolant in the three lines surrounding the second valve 107 are given in the table below.

| Coolant Temperature/°C | | |
|---|---|---|
| Line 113 | Line 114 | Line 115 |
| 80 | 30 | 80 |
| 90 | 60 | 75 |
| 100 | 70 | 70 |

If the temperature of the coolant from the engine cylinders 108 in line 113 is 80°C, and the temperature of the coolant from the Radiator 109 in line 114 is 30 °C, then the second valve 107 closes off flow from the Radiator 109 such that only coolant from line 113 enters line 115. Therefore the temperature of the coolant in line 115 is also 80 °C. Similarly, if the temperature of the coolant from the two sources rises such that the coolant in line 113 is 100 °C and the coolant in line 114 is 70°C, then the barrier within the second valve 107 will move to close off line 113. Hence coolant only flows from line 114 into line 115, and the temperature of the coolant in line 115 is 70 °C.

At intermediate temperatures, there is typically some mixing in the second valve. For example, if the coolant in line 113 is 90 °C, and the temperature in line 114 is 60 °C, the flow from the two lines is equal, such that the temperature in line 115 is 75°C. As such, the second valve controls the temperature of coolant being directed towards the transmission heat exchanger 103 by controlling the rate of flow of coolant from the engine cylinders 108 and the radiator 109.

Since the temperature of the coolant in the line 114 is dependent upon the temperature of coolant returning from the radiator 109, it is sensitive to the ability of the radiator to dispose of the engine's excess heat. As the engine and the radiator heat up, the temperature of the coolant in the line 114 also heats up. Similarly, if there is little air flow and the radiator cannot cool the coolant effectively, then the coolant in the line 114 will also heat up. This heat then informs the actions of the first and second valves as described below and above.
The first valve 106 is also a three port valve comprising two inputs 116,119 and an output 117. The two inputs of the first valve 106 are provided with coolant from the cabin heater 121, along conduit 119, and the transmission heat exchanger 103, along conduit 116, respectively. Coolant flowing through the output of the first valve 106 returns to the pump 104 along conduit 117.

The first valve 106 also comprises a barrier which can be moved to change the relative proportions of coolant from the cabin heater 121 and the transmission heat exchanger 103 which reach the pump 104. The first valve 106 is a wax valve which comprises a wax component which expands and contracts as it changes temperature. The position of the barrier within the first valve 106 is determined by the size, and hence the temperature of the wax component.

When the barrier in the first valve 106 is in a "closed" position, the flow of coolant along conduit 116 from the transmission heat exchanger is reduced to a relatively small "bleed" rate of flow. Instead, coolant is able to flow along conduit 119, that is, in a closed circuit through the engine cylinders 108, the cabin heater 121 and the pump104. As such, when the first valve is "closed", the flow of coolant through the transmission heat exchanger 103 is reduced, but it is still sufficient a) to provide a small amount of cooling (although this is mostly unnecessary at engine start-up), b) to warm up the transmission heat exchanger and c) to influence the position of the barrier in the valve.

As the barrier in the first valve 106 moves, this opens up the connection along conduit 116 through the first valve 106 from the transmission heat exchanger 103. As such, the rate of flow through the second valve 107 and the transmission heat exchanger 103 is increased. However, the amount of coolant which can flow from the transmission heat exchanger 103 through the first valve 106 to the pump 104 depends at least in part on the position of the barrier in the first valve 106 and hence the temperature of the wax component in the first valve 106.

The cabin heater 121 is provided with a bypass conduit 120, along which coolant can flow to the pump 104, such that coolant can continue to flow through the cabin heater as required even when flow through the first valve 106 is obstructed.

The wax component in the first valve 106 is arranged so that it is influenced by the temperature of both inputs 116,119 to the first valve. The majority of the wax component is exposed to coolant from the cabin heater 121 in conduit 119. The rest of the wax component is exposed to coolant from the transmission heat exchanger 103 in conduit 116. However, whichever conduit 116,119 of the valve 106 heats the wax component, the vale opens on such heating to increase the flow through the transmission heat exchanger.

At normal operating temperatures and pressures, between 25% and 30%, or advantageously 27%, of the wax component is influenced by the temperature of coolant in the conduit 116 and the remainder by the temperature of the coolant from the cabin heater. As such, the temperature of the wax component, and hence the size of the wax component and the location of the barrier within the first valve 106, depends upon the temperatures of the coolant from the cabin heater 121 and the coolant from the transmission heat exchanger 103.

Thus, initially, at engine start up, coolant from the engine cylinders 108 will flow through the cabin heater so that the occupants of the vehicle are initially warmed. As the engine continues to operate, the coolant from the engine cylinders will tend to become warmer. However, if the ambient conditions are cold and the cabin heater is operating to increase the temperature in the cabin, this tends to ensure that the coolant passing from the cabin heater 121 to the first valve 106 through line 119 is comparatively cold. This is because the cabin heater 121 uses the coolant to heat air for circulation in the vehicle cabin, cooling the coolant in the process. Hence the first valve will typically be closed while the cabin and the engine warm up shortly after start up, owing to the influence of cold coolant coming from the cabin heater 121. Once the engine cylinders 108 and the cabin have warmed up, the temperature of the coolant reaching the first valve from the cabin heater 121 will then tend to rise, causing the first valve to open the flow from the transmission cooler 103.

Should for any reason the transmission start to heat up excessively, before the engine coolant and the vehicle cabin has raised in temperature, the valve 106 will open the flow from the transmission cooler 103 by virtue of the bleed flow through the valve in its closed position; whereupon the transmission can be cooled. For example,

| State | Transmission Heat Exchanger conduits (116) temperature (°C) | Cabin Heater conduits (119) temperature (°C) | Valve (106) condition | Result |
|---|---|---|---|---|
| 1 | 10 | 10 | Closed | No transmission heating or cooling |
| 2 | 35 | 75 | Closed | No transmission heating or cooling |
| 3 | 35 | 80 | Open (By coolant in conduit 119) | Transmission heating or cooling |
| 4 | 120 | 60 | Open (By coolant in conduit 116) | Transmission cooling |

Thus, in the states above, state 1 may be the condition of the temperatures in the two conduits on engine start-up, where the ambient temperature is 10°C. The temperature in conduit 116 will typically rise quickest and the cabin of the vehicle receives warm coolant for heating. Whether that heat is employed for cabin heating depends on the settings of the cabin heater.

State 2 is an example of a typical state circa five minutes after first engine start. In state 2 the cabin heater 121 conduit 119 temperature as measured in the first valve 106 has only risen to 75 °C and so the first valve 106 remains closed preventing heating of the transmission heat exchanger 103.

State 3 is an example of a typical state circa 8 minutes after first engine start. The cabin heater 121 conduit 119 temperature as measured in the first valve 106 has now risen to 80 °C or above an enabling temperature for the first valve to now open, allowing a flow of coolant along conduit 116, and so commence heating of the transmission. Depending upon the temperature of the transmission and the state of the second valve, the coolant flowing through the transmission heat exchanger may alternatively have the effect of cooling the transmission.

State 4 can occur, for example, if the vehicle is being driven with the windows open and the heating turned on. In such circumstances, the cabin heater continues to work hard, cooling the coolant flowing into line 119. If the transmission is also working hard, for example during city driving, where the vehicle is likely to start, stop and change gears frequently, the transmission may become heated, and there is a risk that the transmission will be over heated and damaged. In state 4, the coolant from the transmission in line 116 is 110 °C. Due to the bleed of coolant through the first valve from the transmission heat exchanger 103, the hot coolant in line 116 causes the first valve 106 to open, allowing the transmission 102 to be cooled.

Figure 2 shows a chart illustrating the relationship between the temperature of the wax component in the first valve 106, and the rate of flow in line 116 of coolant from the transmission heat exchanger 103 through the first pump 104 when the pump 104 is providing coolant to these components at a constant pressure.

Line 201 illustrates the behaviour of the first valve 106 as the temperature of the wax component rises. At low temperatures the rate of flow is at a bleed rate (see point 202 in the chart). As the temperature rises (whether by increase in temperature in either or both the lines 116,119), so does the rate of flow in line 116 until it reaches a maximum rate. This is because the first valve is "opening" at this time.

The first valve 106 is arranged, however, to exhibit a distinct hysteresis. Line 203 illustrates the behaviour of the first valve 106 as the temperature of the wax component falls. A drop in temperature here corresponds to a reduction in the amount of coolant flow over a particular range of temperatures, until the first valve 106 is closed again. However the gap between lines 201 and 203 ensures that, should the temperature of the wax component first rise and then fall, the temperature must drop a significant amount before the first valve 106 begins to close again. Similarly, if the temperature first drops and then rises, the temperature must rise a significant amount before the first valve 106 begins to open again. Therefore, if the temperature fluctuates in the region of hysteresis (ie between the lines 201,203), the wax valve does not hunt between open and closed positions, but rather only responds to larger changes in temperature.

The position of the barrier in the first valve 106 is therefore influenced by the temperature of the coolant from the transmission heat exchanger 103, as well as from the cabin heater. The bleed flow from the transmission heat exchanger ensures that the wax component in the first valve 106 is influenced by the temperature of the coolant from the transmission heat exchanger even when the first valve 106 is closed. Hence as the temperature of the coolant from the transmission heat exchanger rises, the first valve 106 will tend to open, and allow a greater flow of coolant. Similarly, as the temperature of the coolant from the transmission heat exchanger sinks, the first valve 106 will tend to close, and allow only a smaller flow of coolant. As such, the first valve 106 regulates the temperature of the transmission 102 by allowing more coolant to flow through the transmission heat exchanger 103 when the coolant heats up.

As mentioned above, the second valve 107, which is also a wax valve similar to the first valve 106, regulates the temperature of the coolant entering the transmission heat exchanger 103 by mixing coolant of different temperatures from the engine cylinders 108 and the radiator 109. The position of the barrier within the second valve 107 depends upon the temperature of a wax component within the second valve 107. The second valve allows more coolant directly from the engine and less coolant directly from the radiator if the temperature of the wax component within the second valve 107 drops. The second valve allows less coolant directly from the engine and more coolant directly from the radiator if the temperature of the wax component within the second valve 107 rises.

A fluid connection, which is not shown in Figure 1, is provided between line 112 and line 114, the two lines which transport coolant away from the radiator 109. This allows "cross talk" between the two lines, so that the fluid in line 114 can get hotter and colder according to the state of the radiator 109 even if the fluid in line 114 is not flowing, due to heat transfer and intermixing with the coolant in line 112. In an alternative embodiment, line 112 and line 114 are held close together within the engine compartment so that a similar effect can be achieved by conduction of heat from one line to another through the material surrounding each line.

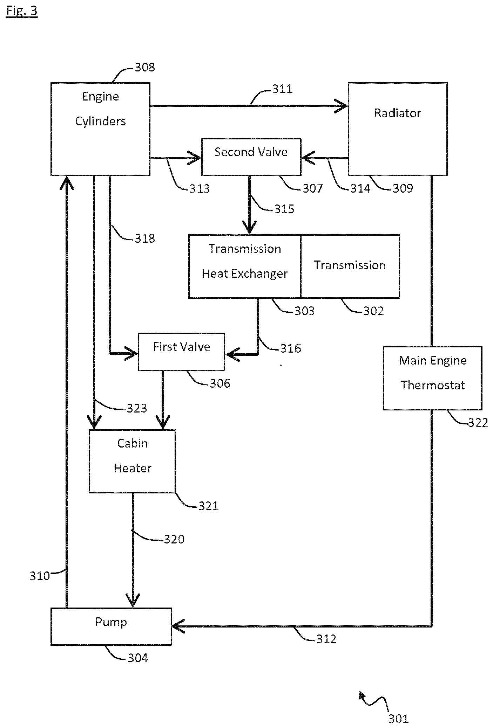

Figure 3 shows a second engine 301 according to the invention. The second engine 301 is similar to the first engine 101, and like components are labelled with like numbers, except in the 300s range instead of the 100s range. However, the first valve 306 in the second engine 301 is located upstream of the cabin heater 321. Therefore coolant flows from the engine cylinders 308 directly to the first valve 306 through the line 318. The temperature of the coolant from the engine cylinders 308 dictates at least in part the state of the first valve 306 and hence the rate of flow of coolant through the transmission fluid cooler 303, as was described with reference to the first engine 101 above. Coolant from the first valve 306 then passes into the cabin heater 321 where it is used to heat air for circulation in the vehicle cabin. A second line 323 is provided between the engine cylinders 308 and the cabin heater 321 to ensure that the cabin heater is still provided with a plentiful supply of warm coolant if needed, regardless of the state of the first and second valves.

In the examples given above a transmission cooling system is used with an internal combustion engine, however a cooling system according to the invention can be used with any sort of engine which comprises a transmission, for example the electrical engine in an electrical vehicle or a hybrid electrical vehicle.

There may be provided a transmission heat exchange system comprising:
a transmission heat exchanger;
a first valve, the first valve comprising at least a first coolant input and a temperature responsive component which changes condition according to its temperature; and
a pump,
the transmission heat exchanger, the first valve and the pump being arranged in a circuit such that the pump pumps coolant from the transmission heat exchanger to the first valve through the first coolant input,
wherein the first valve is arranged to regulate the flow of coolant through the transmission heat exchanger by opening and closing, the first valve being arranged to open and close according to the condition of the temperature responsive component, such that when the first valve is in a closed state coolant is allowed to flow from the transmission heat exchanger through the first valve at a first rate and when the first valve is in an open state coolant is allowed to flow from the transmission heat exchanger through the first valve at a second rate.
It may be that the second rate is greater than the first rate.
It may be that the first rate is greater than zero.

It may be that the temperature responsive component is at least partially immersed within the coolant in the first coolant input, and that the condition of the temperature responsive component is at least partially determined by the temperature of the coolant within the first coolant input.
Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.
Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A transmission heat exchange system comprising:
a transmission heat exchanger (103);
a first valve (106), the first valve (106) comprising at least a first coolant input (116) and a temperature responsive component which changes condition according to its temperature; and
a pump (104),
the transmission heat exchanger (103), the first valve (106) and the pump (104) being arranged in a circuit such that the pump (104) pumps coolant from the transmission heat exchanger (103) to the first valve (106) through the first coolant input (116),
**characterized in that** the first valve (106) is arranged to regulate the flow of coolant through the transmission heat exchanger (103) by opening and closing, the first valve (106) being arranged to open and close according to the condition of the temperature responsive component, such that when the first valve (106) is in a closed state coolant is allowed to flow from the transmission heat exchanger (103) through the first valve (106) at a first rate and when the first valve (106) is in an open state coolant is allowed to flow from the transmission heat exchanger (103) through the first valve (106) at a second rate, the second rate being greater than the first rate and the first rate being greater than zero,
and **in that** the temperature responsive component is at least partially immersed within the coolant in the first coolant input (116), and such that the condition of the temperature responsive component is at least partially determined by the temperature of the coolant within the first coolant input (116).

2. A transmission heat exchange system as claimed in claim 1, wherein the temperature responsive component comprises a first material which changes volume with temperature, the first material being arranged to operate the first valve (106) when it changes volume.

3. A transmission heat exchange system as claimed in claim 2, wherein the first material comprises wax.

4. A transmission heat exchange system as claimed in claim 2 or claim 3, wherein between twenty five and thirty percent of the first material extends into the first input.

5. A transmission heat exchange system as claimed in any preceding claim, wherein the first valve (106) comprises a second coolant input (119), the second coolant input (119) being arranged to receive coolant from a further engine component,
and wherein the temperature responsive component extends at least partially into the second coolant input (119) such that the condition of the temperature responsive component is at least partially determined by the temperature of the coolant within the second coolant input (119).

6. A transmission heat exchange system as claimed in claim 5, wherein the further engine component is a cabin heater also supplied with coolant by said pump (104).

7. A transmission heat exchange system as claimed in any preceding claim, wherein the transmission heat exchanger (103) is arranged to receive coolant which has been heated above ambient temperatures.

8. A transmission heat exchange system as claimed in claim 7, comprising a second valve (107), the second valve (107) comprising at least a third input (113), the third input (113) and being arranged to receive coolant which has been heated above ambient temperatures, the pump (104) being arranged to pump coolant from the second valve (107) to the transmission heat exchanger (103).

9. A transmission heat exchange system according to claim 8, wherein the second valve (107) comprises a fourth input (114), the fourth input (114) being arranged to receive coolant from a radiator (109).

10. An engine heat exchange system, comprising:
a transmission heat exchange system according to any preceding claim; and
a radiator (109),
the pump (104) being arranged to pump coolant through the radiator (109).

11. An engine for use in a vehicle, the engine comprising an engine heat exchange system according claim 10.

12. A vehicle comprising an engine as claimed in claim 11.

## Patentansprüche

1. Getriebewärmetauschsystem, Folgendes umfassend:
einen Getriebewärmetauscher (103);
ein erstes Ventil (106), wobei das erste Ventil (106) wenigstens einen ersten Kühlmitteleingang (116) und eine temperaturempfindliche Komponente umfasst, die entsprechend ihrer Temperatur den Zustand ändert; und
eine Pumpe (104),
wobei der Getriebewärmetauscher (103), das erste Ventil (106) und die Pumpe (104) in einem Stromkreis angeordnet sind, sodass die Pumpe (104) Kühlmittel von dem Getriebewärmetauscher (103) zu dem ersten Ventil (106) durch den ersten Kühlmitteleingang (116) pumpt,
**dadurch gekennzeichnet, dass** das erste Ventil (106) angeordnet ist, den Fluss des Kühlmittels durch den Getriebewärmetauscher (103) durch Öffnen und Schließen zu steuern, wobei das erste Ventil (106) angeordnet ist, sich entsprechend dem Zustand der temperaturempfindlichen Komponente zu öffnen und zu schließen, sodass, wenn das erste Ventil (106) in einem geschlossenen Zustand ist, das Fließen von Kühlmittel von dem Getriebewärmetauscher (103) durch das erste Ventil (106) mit einer ersten Rate ermöglicht wird, und wenn das erste Ventil (106) in einem offenen Zustand ist, das Fließen von Kühlmittel von dem Getriebewärmetauscher (103) durch das erste Ventil (106) mit einer zweiten Rate ermöglicht wird, wobei die zweite Rate größer als die erste Rate ist und die erste Rate größer als null ist,
und dadurch, dass die temperaturempfindliche Komponente wenigstens teilweise in das Kühlmittel in dem ersten Kühlmitteleingang (116) eingetaucht ist, und sodass der Zustand der temperaturempfindlichen Komponente wenigstens teilweise durch die Temperatur des Kühlmittels in dem ersten Kühlmitteleingang (116) bestimmt wird.

2. Getriebewärmetauschsystem nach Anspruch 1, wobei die temperaturempfindliche Komponente ein erstes Material umfasst, dessen Volumen sich mit der Temperatur verändert, wobei das erste Material angeordnet ist, um das erste Ventil (106) zu betreiben, wenn sich das Volumen verändert.

3. Getriebewärmetauschsystem nach Anspruch 2, wobei das erste Material Wachs umfasst.

4. Getriebewärmetauschsystem nach Anspruch 2 oder 3, wobei sich zwischen fünfundzwanzig und dreißig Prozent des ersten Materials in den ersten Eingang hinein erstrecken.

5. Getriebewärmetauschsystem nach einem der vorhergehenden Ansprüche, wobei das erste Ventil (106) einen zweiten Kühlmitteleingang (119) umfasst, wobei der zweite Kühlmitteleingang (119) angeordnet ist, um Kühlmittel von einer weiteren Motorkomponente aufzunehmen,
und wobei sich die temperaturempfindliche Komponente wenigstens teilweise in den zweiten Kühlmitteleingang (119) hinein erstreckt, sodass der Zustand der temperaturempfindlichen Komponente wenigstens teilweise durch die Temperatur des Kühlmittels in dem zweiten Kühlmitteleingang (119) bestimmt wird.

6. Getriebewärmetauschsystem nach Anspruch 5, wobei die weitere Motorkomponente eine Kabinenheizung ist, die auch mit dem Kühlmittel durch die Pumpe (104) versorgt wird.

7. Getriebewärmetauschsystem nach einem der vorhergehenden Ansprüche, wobei der Getriebewärmetauscher (103) angeordnet ist, Kühlmittel aufzunehmen, das über Umgebungstemperaturen hinaus erwärmt wurde.

8. Getriebewärmetauschsystem nach Anspruch 7, umfassend ein zweites Ventil (107), wobei das zweite Ventil (107) wenigstens einen dritten Eingang (113) umfasst, wobei der dritte Eingang (113) angeordnet ist, Kühlmittel aufzunehmen, das über Umgebungstemperaturen hinaus aufgewärmt wurde, wobei die Pumpe (104) angeordnet ist, um Kühlmittel von dem zweiten Ventil (107) zu dem Getriebewärmetauscher (103) zu pumpen.

9. Getriebewärmetauschsystem nach Anspruch 8, wobei das zweite Ventil (107) einen vierten Eingang (114) umfasst, wobei der vierte Eingang (114) angeordnet ist, um Kühlmittel von einem Kühler (109) aufzunehmen.

10. Motorwärmetauschsystem, Folgendes umfassend:
ein Getriebewärmetauschsystem nach einem der vorhergehenden Ansprüche; und
einen Kühler (109),
wobei die Pumpe (104) angeordnet ist, Kühlmittel durch den Kühler (109) zu pumpen.

11. Motor zur Verwendung in einem Fahrzeug, wobei der Motor ein Motorwärmetauschsystem nach Anspruch 10 umfasst.

12. Fahrzeug, das einen Motor nach Anspruch 11 umfasst.

## Revendications

1. Système d'échange thermique par transfert comprenant :
un échangeur thermique par transfert (103) ;
une première vanne (106), la première vanne (106) comprenant au moins une première entrée de liquide de refroidissement (116) et un composant thermosensible qui change d'état en fonction de sa température ; et
une pompe (104),
l'échangeur thermique par transfert (103), la première vanne (106) et la pompe (104) étant agencés pour former un circuit, de sorte que la pompe (104) pompe le liquide de refroidissement provenant de l'échangeur thermique par transfert (103) vers la première vanne (106) à travers la première entrée de liquide de refroidissement (116),
**caractérisé en ce que**
la première vanne (106) est conçue pour réguler l'écoulement de liquide de refroidissement à travers l'échangeur thermique par transfert (103) par ouverture et fermeture, la première vanne (106) étant conçue pour s'ouvrir et se fermer en fonction de l'état du composant thermoréactif, de sorte que, lorsque la première vanne (106) est à l'état fermé, le liquide de refroidissement peut s'écouler depuis l'échangeur thermique par transfert (103) à travers la première vanne (106) à un premier débit, et lorsque la première vanne (106) est à l'état ouvert, le liquide de refroidissement peut s'écouler depuis l'échangeur thermique par transfert (103) à travers la première vanne (106) à un second débit, le second débit étant supérieur au premier débit et le premier débit étant supérieur à zéro,
et **en ce que** le composant thermoréactif est au moins partiellement immergé à l'intérieur du liquide de refroidissement dans la première entrée de liquide de refroidissement (116), de sorte que l'état du composant thermoréactif est au moins partiellement déterminé par la température du liquide de refroidissement à l'intérieur de la première entrée de liquide de refroidissement (116).

2. Système d'échange thermique par transfert selon la revendication 1, dans lequel le composant thermoréactif comprend un premier matériau qui change de volume avec la température, le premier matériau étant conçu pour faire fonctionner la première vanne (106) lorsqu'il change de volume.

3. Système d'échange thermique par transfert selon la revendication 2, dans lequel le premier matériau comprend de la cire.

4. Système d'échange thermique par transfert selon la revendication 2 ou 3, dans lequel entre 25 et 30 % du premier matériau s'étendent à l'intérieur de la première entrée.

5. Système d'échange thermique par transmission selon une quelconque revendication précédente, dans lequel la première vanne (106) comprend une seconde entrée de liquide de refroidissement (119), la seconde entrée de liquide de refroidissement (119) étant conçue pour recevoir du liquide de refroidissement provenant d'un autre composant de moteur,
et dans lequel le composant thermoréactif s'étend au moins partiellement à l'intérieur de la seconde entrée de liquide de refroidissement (119), de sorte que l'état du composant thermoréactif est au moins partiellement déterminé par la température du liquide de refroidissement à l'intérieur de la seconde entrée de liquide de refroidissement (119).

6. Système d'échange thermique par transfert selon la revendication 5, dans lequel l'autre composant de moteur est un système de chauffage d'habitacle également alimenté en liquide de refroidissement par ladite pompe (104).

7. Système d'échange thermique par transfert selon une quelconque revendication précédente, dans lequel l'échangeur thermique par transfert (103) est conçu pour recevoir du liquide de refroidissement qui a été chauffé au-dessus des températures ambiantes.

8. Système d'échange thermique par transfert selon la revendication 7, comprenant une seconde vanne (107), la seconde vanne (107) comprenant au moins une troisième entrée (113), la troisième entrée (113) étant conçue pour recevoir du liquide de refroidissement qui a été chauffé au-dessus des températures ambiantes, la pompe (104) étant conçue pour pomper du liquide de refroidissement provenant de la seconde vanne (107) vers l'échangeur thermique par transfert (103).

9. Système d'échange thermique par transfert selon la revendication 8, dans lequel la seconde vanne (107) comprend une quatrième entrée (114), la quatrième entrée (114) étant conçue pour recevoir du liquide de refroidissement provenant d'un radiateur (109).

10. Système d'échange thermique pour moteur, comprenant :
un système d'échange thermique par transfert selon une quelconque revendication précédente ; et
un radiateur (109),
la pompe (104) étant conçue pour pomper du liquide de refroidissement à travers le radiateur (109).

11. Moteur destiné à un véhicule, le moteur comprenant un système d'échange thermique pour moteur selon la revendication 10.

12. Véhicule comprenant un moteur selon la revendication 11.
